# EUROPEAN PATENT SPECIFICATION

(11) **EP 3 337 062 B1**
(45) Date of publication and mention of the grant of the patent: **14.07.2021**
(21) Application number: 16206967.8
(22) Date of filing: 27.12.2016
(51) Int. Cl.: H04B 10/2575, H04B 1/28, H04H 40/90, H04N 7/20

(54) **A METHOD AND AN APPARATUS FOR TRANSMITTING A PLURALITY OF RECEIVED SATELLITE AND DIGITAL TERRESTRIAL TELEVISION SIGNALS THROUGH A FIBER NETWORK**
VERFAHREN UND VORRICHTUNG ZUR ÜBERTRAGUNG EINER MEHRZAHL VON EMPFANGENEN SATELLITEN- UND DIGITALEN TERRESTRISCHEN FERNSEHSIGNALEN MITTELS EINES FASERNETZWERKS
PROCÉDÉ ET APPAREIL DE TRANSMISSION D'UNE PLURALITÉ DE SIGNAUX DE TÉLÉVISION DE TERRE NUMÉRIQUES ET REÇUS PAR SATELLITE PAR L'INTERMÉDIAIRE D'UN RÉSEAU PAR FIBRES

(30) Priority: 13.12.2016 LT 2016533
(43) Date of publication of application: 20.06.2018
(73) Proprietor: UAB "Terra", 51256 Kaunas (LT)
(72) Inventor: SKOROBOGATOV, Genadij, 51256 Kaunas (LT)
(74) Representative: Zaboliene, Reda

(56) References cited:
- WO-A2-98/48519
- US-A1- 2008 112 385

## Description

### Field of the invention

This disclosure generally relates to a transmission of signals from a satellite(s) and a digital terrestrial television tower(s) to a user through a fiber optical network. In particular: it relates to different stages of converting / modifying the mentioned signals, combining, shifting and splitting them, also transmitting and receiving them according to a defined order / scheme.

### Background of the invention

In this invention are provided the method and the apparatus for transmitting a plurality of received satellite and digital terrestrial television (DTT) signals through the fiber network including the steps of: down-conversion, frequency shifting, combining, modulation, demodulation, and splitting according to the defined sequence to recovery original signals from satellite(s) and digital terrestrial television tower(s) within a receiver with further down conversion of satellite television signals into output signals suitable for processing by customer premises equipment, like: satellite TV set top boxes and TV sets.

Analyzing the background of the invention we would like to indicate the following documents:
1) The international patent application WO2012112693, which was published on August 23,'2012, describes systems and methods to convert satellite signals to an intermediate frequency signal and selecting modulated digital data within the satellite signals for content decoding. One of the embodiment includes an optical low noise block converter (LNB) including a digital channelizer switch configured to select at least one content channel from an input signal including a plurality of content channels modulated onto a carrier and to output an optical signal including the selected at least one content channel.
   However, this patent application describes processing of signals only from satellite(s), also includes only conversion of the signals to intermediate frequency and decoding process.
2) The international patent application WO2015192912, which was published on December 23,'2015, discloses a method which is described for the transmission and reception of digital terrestrial television signals, where said signals comprising a plurality of radio television programs or services receivable by a television receiver in a certain frequency band, wherein at least a portion of said frequency band has been discontinued for the digital terrestrial television signals and assigned to a different service, in particular to a mobile telephony service, such as the LTE type, wherein it is provided to receive said radio television programs or services whose contents are transmitted through Internet type signals that are converted into radio television signals of the terrestrial digital broadcasting type and placed in channels belonging to said portion of said frequency band, where said digital terrestrial television signals not being radiated, but conveyed to said receiver via a coaxial cable distribution system.
   However, this patent application is focused only on receiving signals from digital terrestrial television tower(s) and distributing them via coaxial cable to the net of users through the Internet.
3) US2011283330 (US8351796) document, which was published on November 17,'2011, discloses a low-noise block down-converter which includes a first down-converting circuit for down-converting and filtering a first polarization signal for outputting a first intermediate-frequency signal, a second down-converting circuit for down-converting and filtering a second polarization signal for outputting a second intermediate-frequency signal, wherein a frequency band of the first intermediate-frequency signal is the same as that of the second intermediate-frequency signal, an oscillator for generating an oscillating signal, outputted to the first down-converting circuit and the second down-converting circuit, a first optical transmitter coupled to the first down-converting circuit for converting the first intermediate-frequency signal into a first optical signal,; and a second optical transmitter coupled to the second down-converting circuit for converting the second intermediate-frequency signal into a second optical signal.
   However, this application describes down-converting capabilities and filtering process in the low-noise block converting several high frequency signals to optical signals. It is nothing mentioned about the combining of two different type of signals that further are processed in order to get signals suitable for processing by customer premises equipment. Also no information about splitting and shifting procedures for signals.
4) The international patent application WO2007096617, which was published on August 30,'2007, relates to a distribution network for broadcast data which is received at a receiving means location. The network typically includes a plurality of cable connections which carry the data in an RF or more typically an optical mode into which the same is converted at the receiving means location. A plurality of decoding means locations are connected to the common receiving means via the network and each of the decoding means receives substantially all of the received data simultaneously from said receiving means. The receiving means may include a satellite antenna and LNB for receiving data transmitted by satellite(s) and also antenna for receiving digital terrestrial television data and/or digital audio broadcast data. The decoding means at each location can be independently controlled by a respective user at that location to request any of the data received at the receiving means simultaneously. Thus each user can control, without the need to refer to or be impacted by the user selections made on other decoding means connected to the system at that time.
   This application, in general, is focused on distribution and decoding processes only.
5) US2006193635 (US7509049) document, which was published on August 8,'2006, discloses a method and apparatus which are provided for transferring a plurality of satellite signals through an optical communication network. The method includes the steps of selecting a frequency of a local oscillator signal within a guardband between a left polarization signal and a right polarization signal of a first satellite signal of the plurality of satellite signals, frequency shifting the first satellite signal upwards in frequency by the selected frequency. The method further includes the steps of combining the frequency shifted satellite signal with a second satellite signal of the plurality of satellite signals and modulating a optical carrier with the combined signals, transferring the modulated optical carrier to a receiver through an optical fiber and decoding the first and second satellite signals within the receiver. Analyzing the Prior Art, this document seems to be nearest to the object of this invention however there is an essential difference: in this described document we have signals from the satellite(s) only, however in this invention we have signals from the satellite(s) and from the digital terrestrial television tower(s). Also there are other differences which will be observed more in details below in the next sections of this description. Another transmission apparatus according to the state of the art is known from US-A-2008112385.

### Summary of the invention

The goal of this invention is a method and an apparatus for transmitting a plurality of received satellite and digital terrestrial television signals through a fiber optical network.

The following stages are included in this invention:
down conversion of satellite vertical and horizontal polarizations signals;
frequency shifting upwards of horizontal polarization signal;
down conversion of digital terrestrial television signals;
combining of converted satellite vertical and horizontal polarization signals with down converted digital terrestrial television signals;
modulating optical carrier by the combined signals;
transmitting the modulated optical carrier though the fiber optical network to a receiver;
demodulating the optical carrier;
splitting and recovering origin signals within a receiver;
down conversion of satellite signals into output signals suitable for processing by customer premises equipment.

### Brief Description of the Drawings

Fig. 1 illustrates a simplified block diagram of an optical satellite and digital terrestrial television transmission and receiving system.
Fig. 2 illustrates a detailed block diagram of the transmitter.
Fig. 3 illustrates a detailed block diagram of the receiver.
Fig. 4 illustrates a detailed structure of output down converter.
Fig. 5 illustrates a frequency plan used in the system.
Fig. 6 illustrates a detailed block diagram of the local oscillator source (22) of the transmitter (12).

### Detailed Description of the Invention

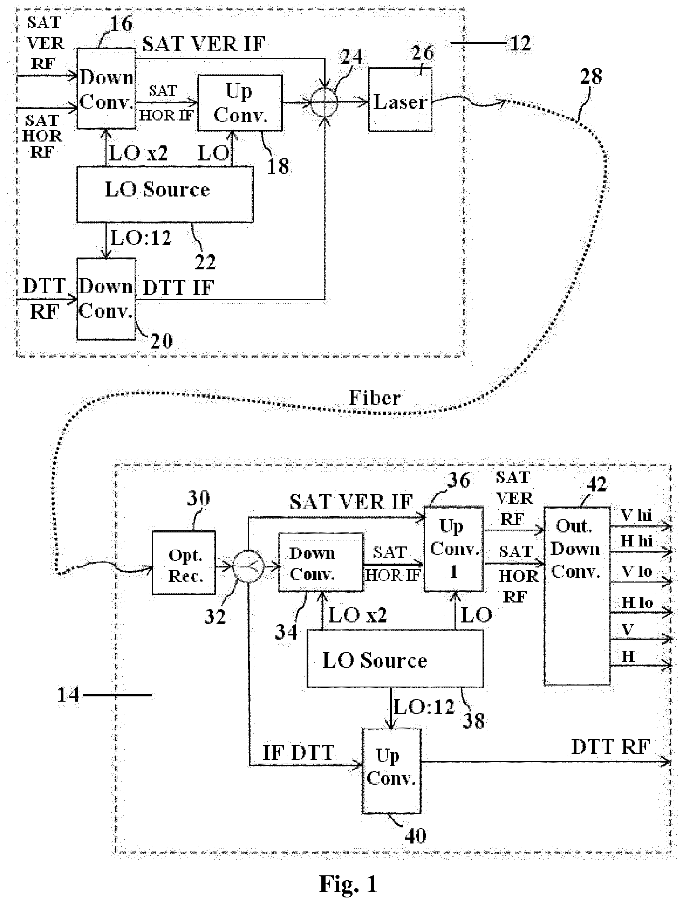

Fig. 1 illustrates a simplified block diagram of an optical satellite and digital terrestrial television transmission and receiving system.

This system, shown in Fig. 1, comprises one or more transmitters (12), connected through an optical fiber (28) to one or more an optical receivers (14). The transmitter (12) may generate multiple satellite signals from other orbit positions for transmitting using multiple optical carriers and further combining to generate optical Wavelength-division multiplexing (WDM) signal for transfer over the single optical fiber (28). The number of receivers (14) may be increased using optical splitters for splitting optical signal transmitted by the transmitter (12).

As shown in Fig. 1, the relatively high frequency signals (10700-12750 MHz) of vertical and horizontal polarizations from satellite(s) may be converted down within the down converter (16) to relatively low intermediate frequency (390-2440 MHz). The horizontal polarization intermediate frequency signal may be converted up within the up converter (18) to a frequency range 2715-4765 MHz. The relatively high frequency signal (470-790 MHz) of digital terrestrial television may be down converted within the down converter (20) to relatively low intermediate frequency (40.416666-360.41666 MHz). The combined signals from down converter (16), up converter (18) and down converter (20) may then be used to modulate the laser transmitter (26).

From the transmitter (12) the modulated optical signal may be transferred trough the fiber (28) to the receiver (14), located in the home/apartment of a customer/user.

Within the receiver (14) the optical signal may be demodulated to Radio Frequency (RF) signal by the optical receiver (30), recovered the signals of the relatively high frequency signals of vertical and horizontal polarizations (10700-12750 MHz) and digital terrestrial television (470-790 MHz), down converted of satellite television signals to frequencies suitable for processing by customer premises equipment, like satellite TV set top boxes and TV sets.

The vertical polarization signal may be recovered within the up converter (36). The horizontal polarization signal may be recovered within the down converter (34) and further up converter (36). The satellite signals of vertical and horizontal polarizations, delivered by the up converter (36) may be down converted within the output down converter (42) to generate output signals suitable for processing by customer premises equipment, like satellite TV set top boxes and TV sets. The digital terrestrial television signals may be recovered within the up converter (40).

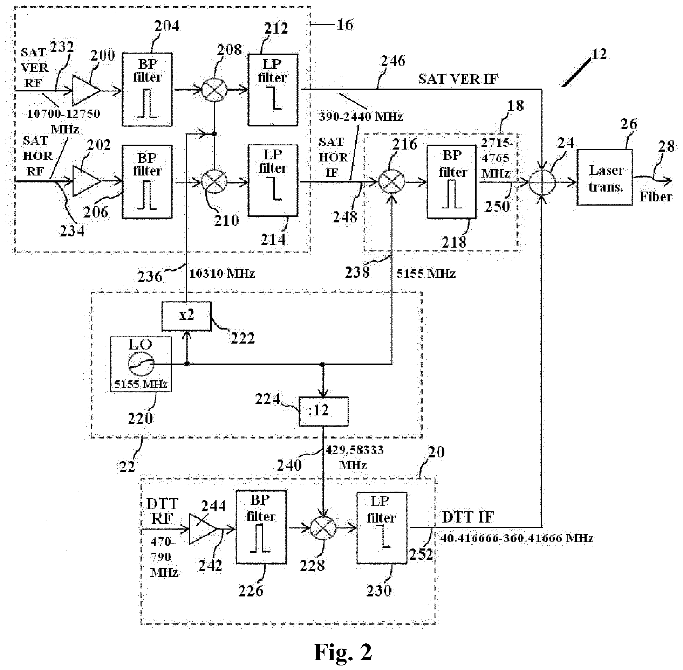

Fig. 2 illustrates a detailed block diagram of the transmitter (12). Before being combined in the combiner (24) and further transmitted by laser transmitter (26) following spectrum transformations may be done:
the received satellite vertical polarization signal (232) is shifted down to generate signal (246);
the received satellite horizontal polarization signal (234) is shifted down to generate signal (248) and further shifted up to generate signal (250);
the received digital terrestrial television signal (242) is shifted down to generate signal (252).

The satellite vertical polarization signal (232) in a range of 10700-12750 MHz may be amplified by a low noise amplifier (200), further filtered within a band pass filter (204) for image rejection and provided as an input to a frequency mixer (208). Frequency shifting within the mixer (208) may be accomplished via a local oscillator signal (236) at 10310 MHz provided by the frequency doubler (222) driven by local oscillator (220). The signal (246) in a range of 390-2440 MHz provided by a frequency mixer (208) after filtering within a low pass filter (212) for cleaning spectrum above frequency 2440 MHz is delivered to the combiner (24).

The satellite horizontal polarization signal (234) in a range of 10700-12750MHz may be amplified by a low noise amplifier (202), further filtered within a band pass filter (206) for image rejection and provided as an input to a frequency mixer (210). Frequency shifting within the mixer (210) may be accomplished via a local oscillator signal (236) at 10310 MHz provided by a frequency doubler (222) driven by local oscillator (220). The signal (248) in a range of 390-2440 MHz provided by a frequency mixer (210) after filtering within a low pass filter (214) for cleaning spectrum above frequency 2440 MHz and provided as an input to a frequency mixer (216). Frequency shifting within the mixer (216) may be accomplished via a local oscillator signal (238) provided by local oscillator (220). The spectrally inverted signal (250) in a range of 2715-4765 MHz delivered by a frequency mixer (216) after filtering within a band pass filter (218) for cleaning spectrum outside frequencies of a range of 2715-4765 MHz before being combined in a combiner (24).

The digital terrestrial television signal (242) in a range of 470-790 MHz may be amplified by a low noise amplifier (244), further filtered within a band pass filter (226) for rejection of unwanted signals and provided as an input to a frequency mixer (228). Frequency shifting within the mixer (228) may be accomplished via a local oscillator signal (240) at 429.5833 MHz provided by the frequency divider (224) at dividing ratio 12 driven by local oscillator (220). The signal (252) in a range of 40.4166-360.4166 MHz delivered by frequency mixer (228) after filtering within a low pass filter (230) for cleaning spectrum above frequency at 360.4166 MHz is delivered to the combiner (24).

The sum of signals (246), (250) and (252) provided by combiner (24) then may be used to modulate laser transmitter (26).

Using single local oscillator source (220) for driving all frequency mixers of the transmitter (12) is an obvious advantage of the system.

The modulated within the laser transmitter (26) optical signal may be distributed trough optical fiber (28) to the plurality of the receivers (14).

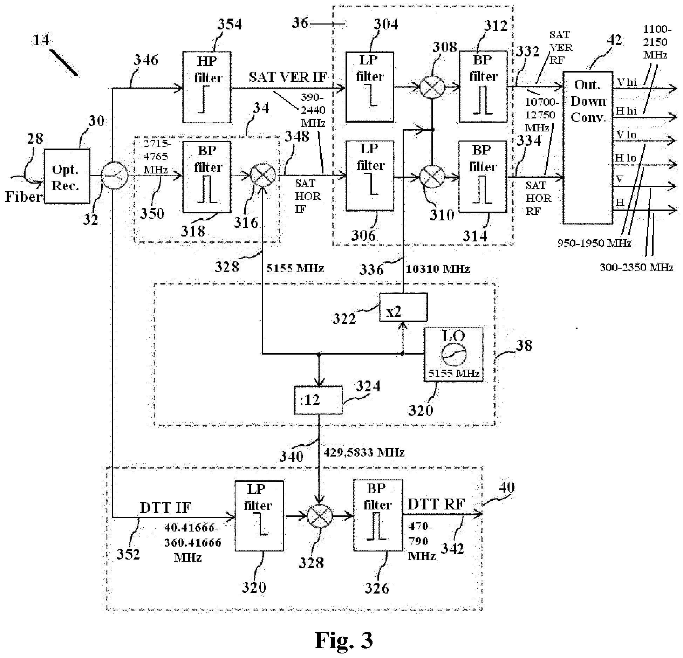

Fig. 3 illustrates a detailed block diagram of the receiver (14). Modulated optical carrier may be received by the optical receiver (30) and demodulated like the sum of signals (346), (350) and (352) after separating in the splitter (32) before being recovered the following spectrum transformations may be done:
the demodulated satellite vertical polarization signal (346) is shifted up to generate signal (332) of 10700-12750 MHz;
the demodulated satellite horizontal polarization signal (350) is shifted down to generate signal (348) and further shifted up to generate signal (334) of 10700-12750 MHz;
the demodulated digital terrestrial television signal (352) is shifted up to generate signal (342) of 470-790 MHz.

After being separated in the splitter (32), the satellite vertical polarization signal (346) in a range of 390-2440 MHz may be filtered within a high pass filter (354) for cleaning spectrum below frequency 390 MHz, then filtered within a low pass filter (304) for cleaning spectrum above frequency 2440 MHz and provided as an input to a frequency mixer (308).

Frequency shifting within the mixer (308) may be accomplished via a local oscillator signal (336) at 10310 MHz provided by the frequency doubler (322) driven by local oscillator (320).

The signal in a range of 10700-12750MHz which is delivered by the frequency mixer (308), may be filtered within a band pass filter (312) for second side band and image rejection (image rejection meaning output down converter (42)) and provided as an input signal (332) to an output down converter (42).

The signal (332) is the recovered satellite vertical polarization signal (232) in a range of 10700-12750 MHz.

After being separated in the splitter (32), the spectrally inverted satellite horizontal polarization signal (350) in a range of 2715-4765 MHz may be filtered within a band pass filter (318) for rejection of image and unwanted signals, and provided as an input to a frequency mixer (316).

Frequency shifting within the mixer (316) may be accomplished via a local oscillator signal (328) at 5155 MHz provided by the local oscillator (320).

The signal (348) in a range of 390-2440 MHz is delivered by the frequency mixer (316) may be filtered within a low pass filter (306) for spectrum cleaning above 2440 MHz and provided as an input signal to a frequency mixer (310).

Frequency shifting within the mixer (310) may be accomplished via a local oscillator signal (336) at 10310 MHz provided by the frequency doubler (322) driven by local oscillator (320).

The signal in a range of 10700-12750MHz is delivered by the frequency mixer (310) may be filtered within a band pass filter (314) for second side band and image rejection (image rejection meaning down converter (42)) and provided as an input signal (334) to an output down converter (42). The signal (334) is the recovered satellite horizontal polarization signal (234) in a range of 10700-12750 MHz.

After being separated in the splitter (32), the digital terrestrial television signal (352) in a range of 40.4166-360.4166 MHz may be filtered within a low pass filter (320) for rejection of unwanted signals and provided as an input to a frequency mixer (328). Frequency shifting within the mixer (328) may be accomplished via a local oscillator signal (340) at 429.5833 MHz provided by the frequency divider (324) at dividing ratio 12 driven by local oscillator (320). The signal in a range of 470-790 MHz delivered by the frequency mixer (328) may be filtered within band pass filter (326) for rejection of out of band spurious and provided as an output signal (342) for further distribution to customer premises equipment, for example TV sets.

Using single local oscillator source (320) for driving all frequency mixers of the receiver (14) for recovering origin signals is an obvious advantage of the system.

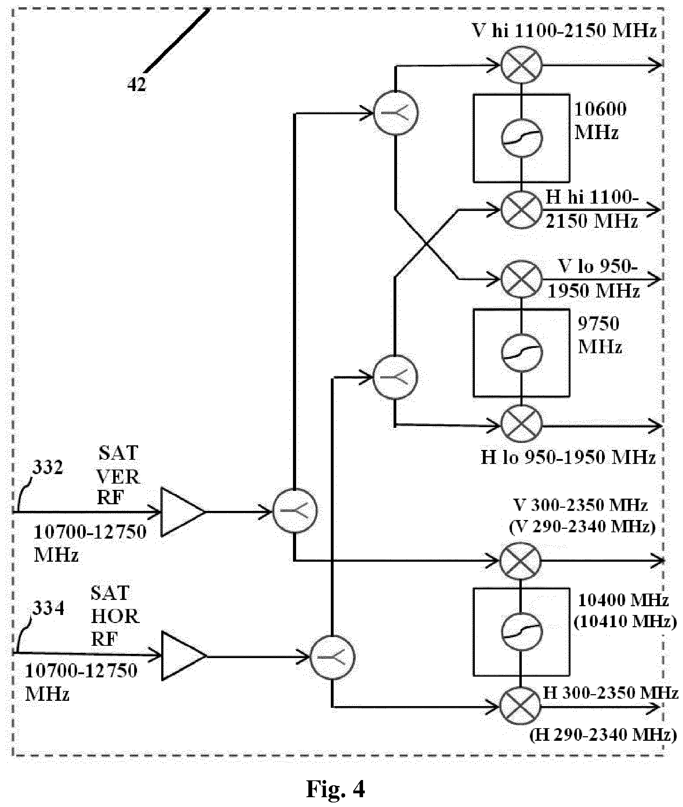

Recovered satellite vertical polarization signal (332) in a range of 10700-12750MHz and satellite horizontal polarization signal (334) in a range of 10700-12750MHz further may be processed within output down converter (42) using well know technology widely used in low noise blocks (LNBs) dedicated for reception of signals from telecommunication satellite(s). The example of a block diagram of possible solution of output down converter (42) which is shown in more details in Fig. 4.

As the result the multiple following output signals may be generated: QUATTRO LNB frequencies: Vertical high 1100-2150 MHz, Horizontal high 1100-2150 MHz, Vertical low 950-1950 MHz, Horizontal low 950-1950 MHz as well as WIDE BANB LNB frequencies: Vertical 300-2350 MHZ and Horizontal 300-2350 MHz. Also WIDE BAND LNB may have slightly different (shifted) frequencies standard, for example: Vertical 290-2340 MHz and Horizontal 290-2340 MHz.

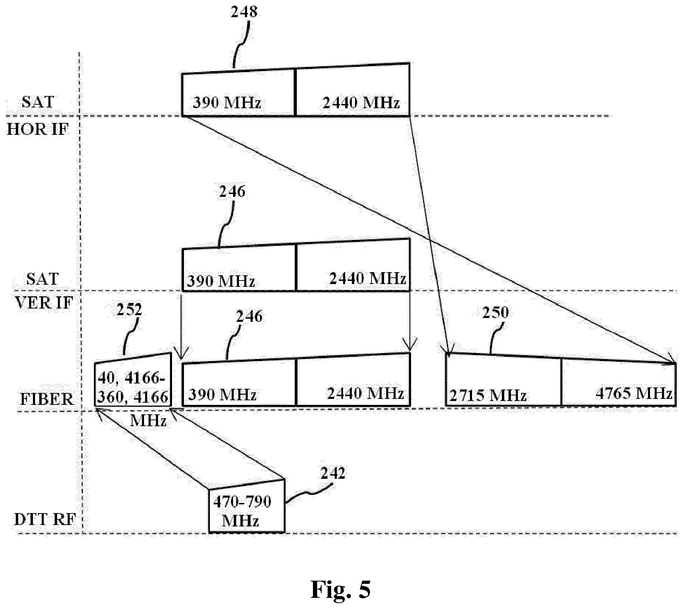

Fig. 5 illustrates a frequency plan used in the system.

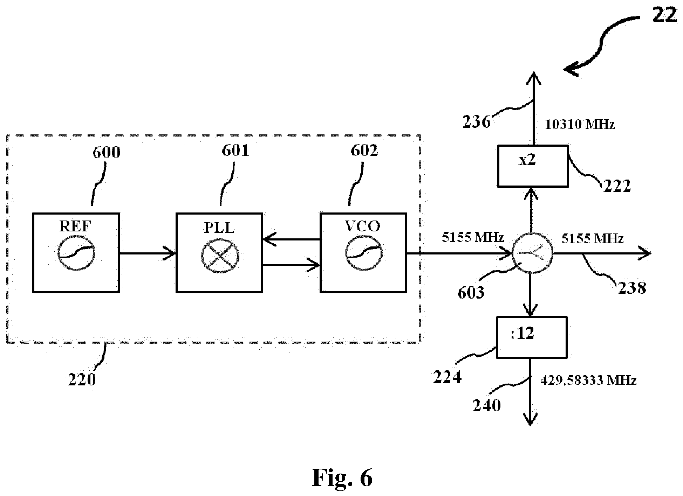

Fig. 6 illustrates a detailed block diagram of the local oscillator source (22) of the transmitter (12). The local oscillator (220) may generate signal (238) using voltage controlled oscillator (VCO) (602) that is stabilized by phase locked loop (PLL) circuitry (601) and synchronized to the signal of the reference frequency source (REF) (600). After being separated in splitter (603), local oscillator signal (238) at frequency 5155 MHz may be used as only one driving signal for the following:
like an input signal for frequency doubler (222) for generating two times higher frequency signal (236) at 10310MHz for further using at down converter (16);
like an input signal for frequency divider (224) for generating twelve times lower frequency signal (240) at 429.58333 MHz for further using at down converter (20);
like an local oscillator signal (238) at frequency 5155 MHz for further using at up converter(18).

The same internal structure could used for local oscillator source (38) of the receiver (14)

The following detailed description is provided to assist the reader in gaining a comprehensive understanding of the features, components and/or systems described herein. However, various changes, modifications, and equivalents of the features, components and/or systems described herein will be apparent to persons skilled in the art. Also, descriptions of functions and constructions that are well known to persons skilled in the art may have been omitted for increased clarity and conciseness. The features described herein may be embodied in different forms, and are not to be construed as being limited to the examples described herein. Rather, the examples described herein have been provided so that this disclosure will be thorough and complete, and will convey the full scope of the disclosure to persons skilled in the art. In the following description of examples, reference is made to the accompanying drawings which form a part hereof, and in which it is shown by way of illustration specific examples that can be practiced. It is to be understood that other examples can be used and structural changes can be made without departing from the scope of the disclosed examples. Although examples of this disclosure have been fully described with reference to the accompanying drawings, it is to be noted that various changes and modifications will become apparent to those skilled in the art. Such changes and modifications are to be understood as being included within the scope of examples of this disclosure as defined by the appended claims.

## Claims

1. An apparatus for a transmission of a plurality of received satellite and digital terrestrial television signals through a fiber optical network, comprising modules arranged for:
receiving signals from Radio frequency (RF) sources;
converting them and transmitting through a fiber network;
receiving optical signals from the fiber network;
converting them and preparing for processing by a customer premises equipment;
**characterized in that** it has the following functional modules:
a down conversion module (16) arranged for down converting of a relatively high frequency range of 10700-12750 MHz satellite vertical and horizontal polarizations signals to a relatively low intermediate frequency range of 390-2440 MHz;
a frequency shifter / up converter (18) arranged for frequency shifting upwards in the range of 2715-4765 MHz, of a horizontal polarization signal;
a down conversion module (20) arranged for down converting of a relatively high frequency range of 470-790 MHz digital terrestrial television signals to a relatively low intermediate frequency range of 40.416666-360.41666 MHz;
a combiner module (24) arranged for:
combining:
the converted satellite vertical polarization signals from the down converter (16) with
the converted satellite horizontal polarization signals from the frequency shifter / up converter (18) with association of the down converter (16), with
the converted digital terrestrial television signals from the down converter (20)
and modulating an optical carrier by the combined signals;
a fiber optical network (28);
an optical receiver (30);
a transmitter (26) arranged for transmitting the modulated optical carrier through the fiber optical network (28) to an optical receiver (30);
the optical receiver (30) arranged for receiving the mentioned signals from the fiber optical network (28);
an output down converter (42), which is in the receiver (14) arranged for generating output signals, which come from satellite(s), suitable for processing by the customer premises equipment, like satellite TV set top boxes and TV sets;
an up converter (40), which is in the receiver (14) arranged for recovery of the digital terrestrial television signals.

2. The apparatus according to claim 1, **characterized in that** it has an up converter (36) for recovery of the satellite vertical polarization signals.

3. The apparatus according to claim 1 or 2, **characterized in that** it has a down converter (34) with association of the up converter (36) for recovery of the satellite horizontal polarization signals.

4. The apparatus according to the above mentioned claims, **characterized in that** within the receiver (14) the apparatus is configured such that the optical signal may be demodulated to Radio Frequency (RF) signal by the optical receiver (30), and configured to recover the signals of the relatively high frequency signals of vertical and horizontal polarizations (10700-12750 MHz) and digital terrestrial television (470-790 MHz), down convert of satellite television signals to frequencies suitable for processing by customer premises equipment, such as satellite TV set top boxes and TV sets.

5. The apparatus according to the above mentioned claims, **characterized in that** it has a local oscillator source (22), where the local oscillator (220) is configured to generate signal (238) using voltage controlled oscillator (VCO) (602) that is stabilized by phase locked loop (PLL) circuitry (601) and synchronized to the signal of the reference frequency source (REF) (600); after being separated in splitter (603), local oscillator signal (238) at frequency 5155 MHz may be used as only one driving signal for the following:
an input signal for frequency doubler (222) for generating two times higher frequency signal (236) at 10310MHz for further using at down converter (16);
an input signal for frequency divider (224) for generating twelve times lower frequency signal (240) at 429.58333 MHz for further using at down converter (20);
an local oscillator signal (238) at frequency 5155 MHz for further using at up converter (18).

6. A method for transmission a plurality of a received satellite and a digital terrestrial television signals through a fiber optical network using the apparatus according to claims 1-5,
**characterized in that** it has the following steps:
a step of down conversion of a relatively high frequency range of 10700-12750 MHz satellite
vertical and horizontal polarizations signals to a relatively low intermediate frequency range of 390-2440 MHz;
a step of frequency shifting / up conversion for upwards frequency shifting a horizontal polarization signal in the range of 2715-4765 MHz. a step of down conversion for down converting of a relatively high frequency range of 470-790 MHz digital terrestrial television signals to a relatively low intermediate frequency range of 40.416666-360.41666 MHz;
a step of combining of the converted satellite vertical and converted and up shifted horizontal polarization signals with the converted digital terrestrial television signals;
a step of modulation of an optical carrier by the combined signals;
a step of transmission of the modulated optical carrier through the fiber optical network (28) to an optical receiver (30);
a step of receiving of the mentioned signals from the fiber optical network (28);
a step of down conversion of satellite signals for generating an output signal suitable for processing by the customer premises equipment, such as satellite TV set top boxes and TV sets;
a step of up conversion for recovery of the digital terrestrial television signals.

7. The method according to claim 6, **characterized in that** it comprises the step of up conversion for recovery of the satellite vertical polarization signals.

8. The method according to claim 6 or 7, **characterized in that** it comprises the step of down conversion with association of the up conversion for recovery of the satellite horizontal polarization signals.

## Patentansprüche

1. Vorrichtung zur Übertragung einer Vielzahl von empfangenen Satelliten- und digitalen terrestrischen Fernsehsignalen über ein Glasfasernetz, umfassend Module, die für das Folgende ausgelegt sind:
Empfang von Signalen von Hochfrequenzquellen (HF);
Konvertierung und Übertragung derselben über ein Glasfasernetz;
Empfang von optischen Signalen von einem Glasfasernetz;
Konvertierung und Vorbereitung derselben für die Verarbeitung durch Geräte des Kunden vor Ort;
**dadurch gekennzeichnet, dass** sie folgende Funktionsmodule enthält:
ein Abwärtskonvertermodul (16), das zur Abwärtskonvertierung der vertikalen und horizontalen Satellitenpolarisationssignale vom relativ hohen Frequenzbereich von 10700 bis 12750 MHz in einen relativ niedrigen Zwischenfrequenzbereich von 390 bis 2440 MHz ausgelegt ist;
einen Frequenzschieber / Aufwärtskonverter (18), der zum Aufwärtsverschieben der Frequenz eines horizontalen Polarisationssignals im Bereich von 2715 bis 4765 MHz ausgelegt ist;
ein Abwärtskonvertermodul (20), das zur Abwärtskonventierung der digitalen terrestrischen Fernsehsignalen vom relativ hohen Frequenzbereich von 470 bis 790 MHz in einen relativ niedrigen Zwischenfrequenzbereich von 40,416666 bis 360,41666 MHz ausgelegt ist;
ein Kombinationsmodul (24), das für Folgendes ausgelegt ist:
Verknüpfen von
den konvertierten vertikalen Satellitenpolarisationssignalen vom Abwärtskonverter (16) mit
den konvertierten horizontalen Satellitenpolarisationssignalen vom Frequenzschieber / Aufwärtskonverter (18) in Verbindung mit dem Abwärtskonverter (16), mit
den konvertierten digitalen terrestrischen Fernsehsignale vom Abwärtskonverter (20); und
Modulation eines optischen Trägers durch die kombinierten Signale;
ein Glasfasemetz (28);
einen optischen Empfänger (30);
einen Sender (26), der zum Senden des modulierten optischen Trägers durch das Glasfasernetz (28) an den optischen Empfänger (30) ausgelegt ist;
einen optischen Empfänger (30), der zum Empfang der erwähnten Signale vom Glasfasernetz (28) ausgelegt ist;
einen Ausgangs-Abwärtskonverter (42), der im Empfänger (14) ausgelegt ist, um Ausgangssignale zu erzeugen, die vom Satelliten stammen und zur Verarbeitung durch Geräte des Kunden vor Ort, z. B. Satellitenfernsehen-Set-Top-Boxen und Fernsehgeräte, geeignet sind;
einen Aufwärtskonverter (40), der im Empfänger (14) zur Wiederherstellung der digitalen terrestrischen Fernsehsignale ausgelegt ist.

2. Vorrichtung nach Anspruch 1, **dadurch gekennzeichnet, dass** sie einen Aufwärtskonverter (36) zur Wiederherstellung der vertikalen Satellitenpolarisationssignale aufweist.

3. Vorrichtung nach Anspruch 1 oder 2, **dadurch gekennzeichnet, dass** sie einen Abwärtskonverter (34) in Verbindung mit dem Aufwärtskonverter (36) zur Wiederherstellung der horizontalen Satellitenpolarisationssignale aufweist.

4. Vorrichtung nach den oben genannten Ansprüchen, **dadurch gekennzeichnet, dass** die Vorrichtung innerhalb des Empfängers (14) so konfiguriert ist, dass das optische Signal durch den optischen Empfänger (30) in das Hochfrequenz-Signal demoduliert und konfiguriert werden kann, um die Signale der relativ hohen Frequenz vertikaler und horizontaler Polarisationen (10700-12750 MHz) und des digitalen terrestrischen Fernsehens (470-790 MHz) wiederherzustellen sowie die Satellitenfernsehsignale in Frequenzen, die zur Verarbeitung durch Geräte des Kunden vor Ort, z. B. Satellitenfernsehen-Set-Top-Boxen und Fernsehgeräte, geeignet sind, abwärtszukonvertieren.

5. Vorrichtung nach den oben genannten Ansprüchen, **dadurch gekennzeichnet, dass** sie eine lokale Oszillatorquelle (22) aufweist, wobei der lokale Oszillator (220) konfiguriert ist, um unter Verwendung eines spannungsgesteuerten Oszillators (englisch: voltage-controlled oscillator, VCO) (602), der durch eine Phasenregelschleife-Schaltung (PLL, nach phase-locked loop) (601) stabilisiert und mit dem Signal der Referenzfrequenzquelle (REF) (600) synchronisiert ist, ein Signal (238) zu erzeugen; nach dem Trennen im Teiler (603) kann das lokale Oszillatorsignal (238) mit einer Frequenz von 5155 MHz als das einzige Versorgungssignal für Folgendes verwendet werden:
ein Eingangssignal für einen Frequenzverdoppler (222), um ein zweifach höheres Frequenzsignal (236) von 10310 MHz zur weiteren Verwendung im Abwärtskonverter (16) zu erzeugen;
ein Eingangssignal für einen Frequenzteiler (224), um ein zwölfmal niedrigeres Frequenzsignal (240) von 429,58333 MHz zur weiteren Verwendung im Abwärtskonverter (20) zu erzeugen;
ein lokales Oszillatorsignal (238) mit einer Frequenz von 5155 MHz zur weiteren Verwendung im Aufwärtskonverter (18).

6. Verfahren zur Übertragung einer Vielzahl von empfangenen Satelliten- und digitalen terrestrischen Fernsehsignalen über ein Glasfasernetz unter Verwendung der Vorrichtung nach den Ansprüchen 1 bis 5, **dadurch gekennzeichnet, dass** es die folgenden Schritte aufweist:
Schritt der Abwärtskonvertierung der vertikalen und horizontalen Satellitenpolarisationssignale vom relativ hohen Frequenzbereich von 10700 bis 12750 MHz in einen relativ niedrigen Zwischenfrequenzbereich von 390 bis 2440 MHz;
Schritt der Frequenzverschiebung / Aufwärtskonvertierung (18) zum Aufwärtsverschieben der Frequenz eines horizontalen Polarisationssignals im Bereich von 2715 bis 4765 MHz;
Schritt der Abwärtskonvertierung zur Abwärtskonventierung der digitalen terrestrischen Fernsehsignalen vom relativ hohen Frequenzbereich von 470 bis 790 MHz in einen relativ niedrigen Zwischenfrequenzbereich von 40,416666 bis 360,41666 MHz;
Schritt des Kombinierens der konvertierten vertikalen Satellitensignale und konvertierten und aufwärts verschobenen horizontalen Polarisationssignale mit den konvertierten digitalen terrestrischen Fernsehsignalen; einen Schritt der Modulation eines optischen Trägers durch die kombinierten Signale;
Schritt der Übertragung des modulierten optischen Trägers durch das Glasfasernetz (28) zu einem optischen Empfänger (30);
Schritt des Empfangs der erwähnten Signale vom Glasfasernetz (28);
Schritt der Abwärtskonvertierung von Satellitensignalen, um einen Ausgangssignal zu erzeugen, das zur Verarbeitung durch Geräte des Kunden vor Ort, z. B. Satellitenfernsehen-Set-Top-Boxen und Fernsehgeräte, geeignet ist;
Schritt der Aufwärtskonvertierung zur Wiederherstellung der digitalen terrestrischen Femsehsignale.

7. Verfahren nach Anspruch 6, **dadurch gekennzeichnet, dass** es den Schritt der Aufwärtskonvertierung zur Wiederherstellung der vertikalen Satellitenpolarisationssignale umfasst.

8. Verfahren nach Anspruch 6 oder 7, **dadurch gekennzeichnet, dass** es den Schritt der Abwärtskonvertierung in Verbindung mit der Aufwärtskonvertierung zur Wiederherstellung der horizontalen Polarisationssignale des Satelliten umfasst.

## Revendications

1. Un appareil pour une transmission d'une pluralité de signaux de télévision satellite et numérique terrestre reçue via un réseau à fibre optique, comprenant des modules agencés pour :
recevoir des signaux de sources de radiofréquence (RF) ;
les convertir et les transmettre via un réseau fibre ; recevoir
des signaux optiques du réseau de fibre ;
les convertir et préparer le traitement par un équipement des locaux d'abonné ;
**caractérisé en ce qu'il** comporte les modules fonctionnels suivants :
un module de conversion descendante (16) agencé pour la conversion descendante de signaux de polarisations verticales et horizontales du satellite passant d'une fréquence relativement élevée entre 10700 et 12750 MHz à une fréquence intermédiaire relativement basse de 390 à 2440 Mhz ;
un convertisseur élévateur / décaleur de fréquence (18) agencé pour un décalage de fréquence vers le haut dans la plage de 2715 à 4765 MHz, d'un signal de polarisation horizontale ;
un module de conversion descendante (20) agencé pour la conversion descendante de signaux de télévision numérique terrestre d'une plage de fréquence relativement élevée de 470-790 Mhz à une plage de fréquences intermédiaires relativement faible de 40,416666-360,41666 Mhz ;
un module combineur (24) agencé pour :
combiner :
les signaux de polarisation verticale de satellite convertis provenant du convertisseur descendant (16) avec
les signaux de polarisation horizontale de satellite convertis provenant du convertisseur élévateur / décaleur de fréquence (18) avec association du convertisseur descendant (16), avec
les signaux de télévision numérique terrestre convertis provenant du convertisseur descendant (20)
et moduler une porteuse optique par les signaux combinés ;
un réseau à fibre optique (28) ;
un récepteur optique (30) ;
un émetteur (26) agencé pour transmettre la porteuse optique modulée à travers le réseau à fibre optique (28) à un récepteur optique (30) ;
le récepteur optique (30) agencé pour recevoir les signaux mentionnés du réseau à fibre optique (28) ;
un convertisseur descendant de sortie (42), qui est dans le récepteur (14) agencé pour générer des signaux de sortie, qui proviennent de satellite(s), approprié(s) pour être traités par l'équipement des locaux d'abonné, comme des décodeurs de télévision par satellite et des téléviseurs ;
un convertisseur élévateur (40), qui est dans le récepteur (14) agencé pour récupérer les signaux de télévision numérique terrestre.

2. L'appareil selon la revendication 1, **caractérisée en ce qu'**il comporte un convertisseur ascendant (36) pour la récupération des signaux de polarisation verticale du satellite.

3. L'appareil selon la revendication 1 ou 2, **caractérisée en ce qu'**il comporte un convertisseur descendant (34) avec association du convertisseur ascendant (36) pour la récupération des signaux de polarisation horizontale du satellite.

4. L'appareil selon les revendications mentionnées ci-dessus, **caractérisées en ce que**, à l'intérieur du récepteur (14), l'appareil est configuré pour
**que** le signal optique puisse être démodulé en signal radiofréquence (RF) par le récepteur optique (30), et configuré pour récupérer
les signaux des signaux à fréquence relativement élevée de polarisations verticales et horizontales (10700-12750 MHz) et télévision numérique terrestre (470-790 Mhz), convertir des signaux de télévision par satellite à des fréquences appropriées pour le traitement par l'équipement des locaux d'abonné, tels que décodeurs et téléviseurs par satellite.

5. L'appareil selon les revendications mentionnées ci-dessus, **caractérisées en ce qu'**il a une source d'oscillateur local (22), où l'oscillateur local (220) est configuré pour générer un signal (238) en utilisant
un oscillateur commandé en tension (VCO) (602) qui est stabilisé par un circuit de boucle à verrouillage de phase (PLL) (601) et synchronisé avec le signal de la source de fréquence de référence (REF) (600) ; après avoir été séparé dans le séparateur (603), le signal d'oscillateur local (238) à la fréquence 5155 MHz peut être utilisé comme un seul signal d'attaque pour ce qui suit :
un signal d'entrée pour doubleur de fréquence (222) pour générer deux fois plus de signal de fréquence (236) à 10310 MHz pour une utilisation ultérieure au convertisseur descendant (16) ;
un signal d'entrée pour un diviseur de fréquence (224) pour générer un signal de fréquence douze fois plus basse (240) à 429,58333 MHz pour une utilisation ultérieure au convertisseur abaisseur (20) ;
un signal d'oscillateur local (238) à la fréquence 5155 MHz pour une utilisation ultérieure au convertisseur élévateur (18).

6. Un procédé pour transmettre une pluralité de signaux de satellite reçus et de télévision numérique terrestre à travers un réseau à fibre optique utilisant l'appareil selon les revendications 1 à 5, **caractérisées par le fait qu'il comporte les étapes suivantes** :
une étape de conversion descendante d'une plage signal de polarisations verticales et horizontales de satellite de fréquence relativement élevée de 10700 à 12750 MHz à une plage de fréquence intermédiaire relativement basse de 390 à 2440 Mhz ;
une étape de décalage de fréquence / conversion ascendante pour décalage de fréquence d'un signal de polarisation horizontale dans la plage de 2715 à 4765 Mhz ;
une étape de conversion descendante pour la conversion descendante de signaux de télévision numérique terrestre d'une plage de fréquence relativement élevée de 470-790 Mhz à une plage de fréquences intermédiaires relativement faible de 40,416666-360,41666 Mhz ;
une étape de combinaison des signaux de polarisation horizontale décalée vers le haut et convertie et verticale de satellite convertie avec les signaux de télévision numérique terrestre convertis ;
une étape de modulation d'une porteuse optique par les signaux combinés ;
une étape de transmission de la porteuse optique modulée à travers le réseau à fibres optiques (28) vers un récepteur optique (30) ;
une étape de réception des signaux mentionnés du réseau à fibre optique (28) ;
une étape de conversion descendante de signaux satellites pour générer un signal de sortie adapté au traitement par l'équipement des locaux d'abonné, tel que des décodeurs et téléviseurs par satellite ;
une étape de conversion pour la récupération des signaux de télévision numérique terrestre.

7. Un procédé selon la revendication 6, **caractérisée en ce qu'**il comporte un l'étape de conversion ascendante pour la récupération des signaux de polarisation verticale du satellite.

8. Procédé selon la revendication 6 ou 7, **caractérisées en ce qu'**elles comprennent l'étape de conversion descendante avec association de la conversion ascendante pour la récupération des signaux de polarisation horizontale du satellite.
